# FASCICULE DE BREVET EUROPEEN

(11) **EP 4 552 866 B1**
(45) Date de publication et mention de la délivrance du brevet: **29.04.2026**
(21) Numéro de dépôt: 24212286.9
(22) Date de dépôt: 12.11.2024
(51) Int. Cl.: B60C 17/04, B60C 17/06

(54) **DISPOSITIF DE ROULEMENT À PLAT**
FLACHWÄLZLAGERVORRICHTUNG
FLAT-ROLLING DEVICE

(30) Priorité: 13.11.2023 FR 2312408
(43) Date de publication de la demande: 14.05.2025
(73) Titulaire: HUTCHINSON, 75008 Paris (FR)
(72) Inventeur: POREBA, Mathieu, 60530 CROUY EN THELLE (FR); SOARES, Laura, 93700 DRANCY (FR)
(74) Mandataire: Gevers & Orès

(56) Documents cités:
- WO-A1-02/24475
- CN-A- 1 843 784
- FR-A1- 2 770 459

## Description

### Domaine technique de l'invention

La présente invention concerne un dispositif de roulement à plat destiné à être monté autour d'un jante de roue d'un véhicule, et un procédé d'installation de ce dispositif.

### Arrière-plan technologique

Les dispositifs de roulement à plat sont connus de la technique et déjà utilisés pour différentes applications, civiles ou militaires (voir par exemple les documents FR 2770459 A, WO 02/24475 A et CN 1843784 A). Le but recherché avec un tel dispositif est de permettre au véhicule de continuer à rouler en cas d'une défaillance d'un pneumatique d'une roue sur laquelle il est monté. La défaillance du pneumatique peut par exemple être due à son éclatement ou à son dégonflement. Le dispositif de roulement permet alors au véhicule de continuer à rouler sur une certaine distance pour pouvoir être réparé ou mis en sûreté.

Le document CN-A-102673321 décrit un exemple de dispositif de roulement à plat comportant un anneau interne monté autour d'une jante et sur lequel sont fixés conjointement des secteurs et une bande élastique.

Le document US-A1-2006/0219345 décrit un autre exemple de dispositif de roulement à plat comportant une bande élastique faite d'une seule pièce montée autour de secteurs.

Ces dispositifs de roulement à plat peuvent néanmoins présenter des inconvénients, notamment des difficultés d'installation autour d'une jante ou des difficultés à monter la bande élastique autour des secteurs. Un autre inconvénient peut résider dans le fait que chaque pièce du dispositif de roulement à plat est conçue pour un type de jante donnée et ne peut donc être utilisée sur une jante d'un type différent, par exemple avec un diamètre plus grand. Un dispositif de roulement à plat donné est alors spécifique à un type de jante donnée.

Aussi, un objectif de l'invention est de proposer un dispositif de roulement à plat n'ayant pas au moins l'un des inconvénients précités.

Un objectif de l'invention est ainsi de proposer un dispositif de roulement à plat qui soit facile à monter.

### Résumé de l'invention

Il est donc proposé un dispositif de roulement à plat destiné à être monté autour d'une jante monobloc de roue d'un véhicule, le dispositif comportant :
- un anneau interne comportant une face radialement interne destinée à être montée contre la jante monobloc, une face radialement externe, une première face latérale et une seconde face latérale, reliant toutes deux la face radialement interne à la face radialement externe, l'anneau interne comportant en outre :
   - une fente s'étendant sur la largeur de l'anneau interne entre la première face latérale et la seconde face latérale,
   - un bossage annulaire agencé sur la face radialement externe, et
   - au moins un pied de calage destinés à prendre appui contre la jante ;
- au moins deux secteurs, chaque secteur étant muni d'une périphérie radialement interne et d'une périphérie radialement externe, et comprenant :
   - une rainure agencée sur la périphérie radialement interne pour coopérer avec le bossage annulaire de l'anneau interne,
   - un premier bord latéral s'évasant radialement vers l'extérieur à partir de la périphérie radialement externe et présentant une étendue angulaire circonférentielle définissant celle du secteur, et
   - un second bord latéral s'évasant radialement vers l'extérieur à partir de la périphérie radialement externe et présentant une étendue angulaire circonférentielle inférieure à l'étendue angulaire circonférentielle du premier bord latéral,
   de sorte qu'une fois les secteurs montés sur l'anneau interne, les seconds bords latéraux des secteurs définissent des ouvertures ;
- une bande élastique faite d'une seule pièce, configurée pour être montée contre la périphérie radialement externe des secteurs ;
- au moins deux moyens de verrouillage, chacun étant destiné à être inséré dans l'une des ouvertures pour maintenir les secteurs entre eux, chaque moyen de verrouillage comprenant un rebord latéral configuré pour venir dans le prolongement circonférentiel du second bord latéral de chaque secteur.

Ainsi, grâce à l'invention, on assure une simplification de l'installation du dispositif de roulement à plat avec un minimum d'éléments à monter et coopérant facilement entre eux. En effet, la fente de l'anneau interne permet à celui-ci de s'ouvrir radialement pour pouvoir être installé autour d'une jante monobloc, sans être gêné par les bords de la jante dont les diamètres respectifs sont généralement supérieurs au diamètre de la partie centrale de la jante autour duquel le dispositif est destiné à être installé. De plus, les secteurs sont guidés par le bossage annulaire de l'anneau interne pour être facilement montés et centrés sur l'anneau. Les différences de dimensions pour les étendues angulaires respectives des premier et second bords latéraux des secteurs permettent de définir des ouvertures qui peuvent servir de prises pour l'installation de la bande élastiques autour des secteurs, et donc faciliter son montage. En outre, les moyens de verrouillage, et en particulier leurs rebords latéraux, permettent de renforcer le blocage axial de la bande élastique entre les premier et second bords latéraux des secteurs, et permettent également, en utilisation, d'empêcher la bande élastique de se désengager de la périphérie radialement externe des secteurs.

Le dispositif selon l'invention peut comprendre une ou plusieurs des caractéristiques ci-dessous, prises isolément les unes avec les autres ou en combinaison les unes avec les autres :
- les ouvertures définies par les seconds bords latéraux des secteurs sont diamétralement opposées,
- l'anneau interne et/ou chaque secteur et/ou chaque moyen de verrouillage sont en matériau plastique, composite ou métallique,
- chacun des secteurs comprend au moins un renfoncement axial ménagé dans le premier bord latéral et/ou dans le second bord latéral,
- chaque rebord latéral des moyens de verrouillage a une étendue angulaire circonférentielle sensiblement égale à l'étendue angulaire circonférentielle du second bord latéral d'un secteur,
- chaque secteur comporte une première extrémité et une seconde extrémité, ces extrémités comportant des moyens de coopération,
- les moyens de coopération sont mécaniques ou magnétiques.

L'invention concerne également une roue d'un véhicule comportant une jante monobloc et un dispositif de roulement à plat tel que décrit dans ce qui précède, le dispositif étant monte dans un pneumatique autour de la jante monobloc.

L'invention concerne également un procédé d'installation d'un dispositif de roulement à plat tel que décrit dans ce qui précède, le procédé comportant les étapes suivantes :
a) installer l'anneau interne autour de la jante de sorte que le ou les pieds de calage sont en appui contre la jante ;
b) monter chacun des secteurs sur l'anneau interne en insérant le bossage annulaire dans la rainure des secteurs de sorte qu'une fois les secteurs montés sur l'anneau interne, les seconds bords latéraux des secteurs définissent des ouvertures ;
c) installer la bande élastique faite d'une seul pièce contre la périphérie radialement externe des secteurs ; et
d) insérer chacun des moyens de verrouillage dans l'une des ouvertures et fixer chaque moyen de verrouillage de sorte à maintenir les secteurs entre eux.

### Brève description des figures

L'invention sera mieux comprise à l'aide de la description qui va suivre, donnée uniquement à titre d'exemple et faite en se référant aux dessins annexés dans lesquels :
La figure 1 représente une vue schématique éclatée du dispositif de roulement à plat selon l'invention,
La figure 2 représente une vue schématique en perspective de l'anneau interne de la figure 1,
La figure 3 représente une vue schématique en perspective d'un secteur de la figure 1,
La figure 4 représente une vue schématique en perspective d'un assemblage de deux secteurs et d'un moyen de verrouillage, non montés sur l'anneau interne,
La figure 5 représente une vue très schématique de la figure 4, en particulier pour illustrer l'étendue angulaire des secteurs, des premier et second bords latéraux et des moyens de verrouillage,
La figure 6 représente des vues très schématiques de configurations différentes (A, B et C) pour l'anneau interne, monté sur des jantes monoblocs différentes,
La figure 7 représente une vue schématique d'une roue d'un véhicule équipé du dispositif de roulement à plat selon l'invention,
La figure 8 représente une vue schématique en coupe de la roue de la figure 7.

### Description détaillée de l'invention

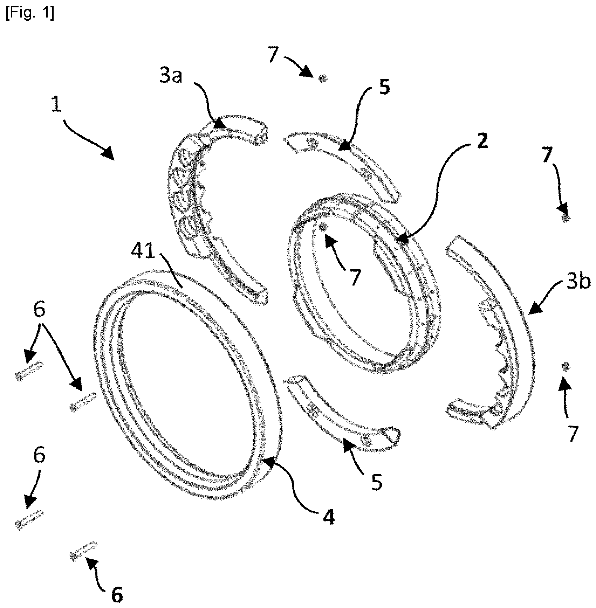

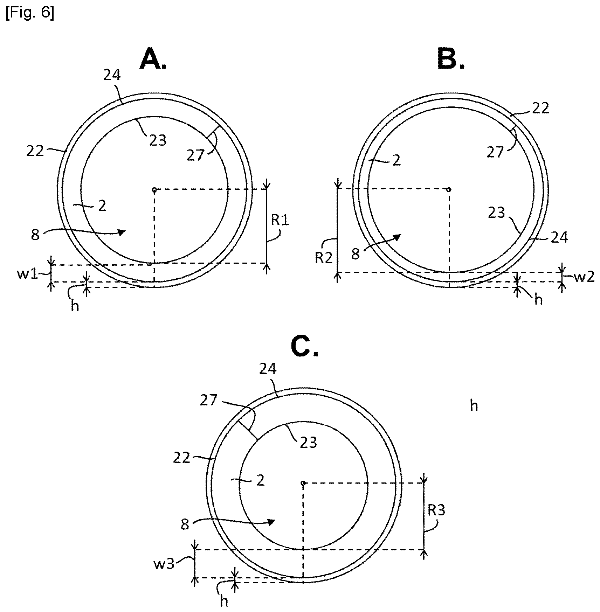

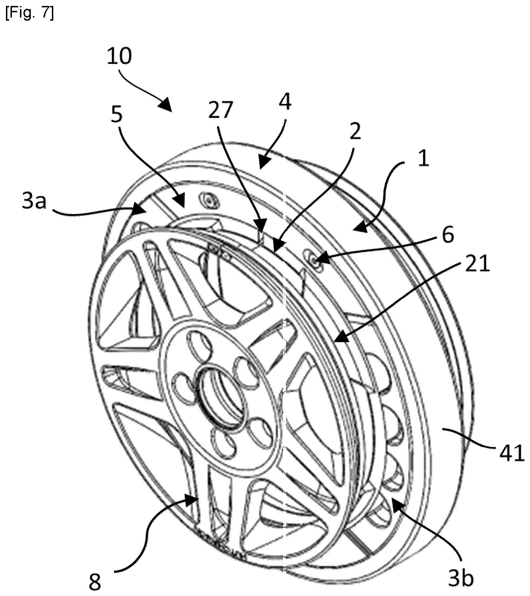

La figure 1 représente schématiquement un dispositif 1 de roulement à plat dont au moins une partie des différentes pièces qui le composent sont séparées des unes des autres. Ce dispositif 1 de roulement à plat comporte ainsi un anneau interne 2, au moins deux secteurs 3a, 3b, une bande élastique 4, au moins deux moyens de verrouillage 5 et des éléments de fixation comme des vis 6 et des écrous 7. Le dispositif 1 de roulement à plat est en outre destiné à être monté autour d'une jante monobloc 8 de roue 9 d'un véhicule qui est illustrée sur les figure 6 et 7.

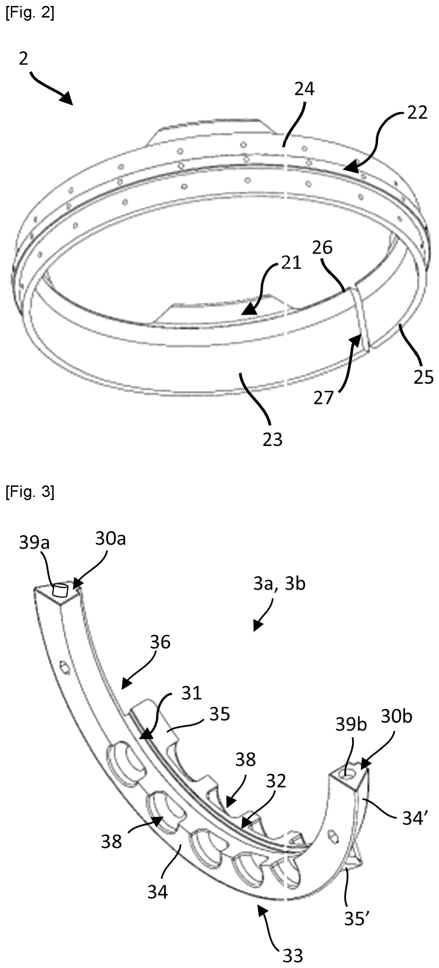

En référence à la figure 2, l'anneau interne 2 du dispositif 1 comporte une face radialement interne 23 destinée à être montée contre la jante monobloc 8, une face radialement externe 24, une première face latérale 25 et une seconde face latérale 26. Les première et seconde faces latérales 25, 26 relient toutes deux la face radialement interne 23 à la face radialement externe 24.

L'anneau interne 2 comporte en outre une fente 27 s'étendant sur la largeur de l'anneau interne 2 entre la première face latérale 25 et la seconde face latérale 26.

L'anneau interne 2 comporte également un bossage annulaire 22 agencé sur la face radialement externe 24. Le bossage annulaire 22 peut s'étendre sur toute la circonférence de la face radialement externe 24 ou sur des portions prédéterminées de la face radialement externe 24.

L'anneau interne 2 comporte encore au moins un pied de calage 21 destiné à prendre appui contre la jante monobloc 8. L'anneau interne 2 peut comporter un unique pied de calage 21 qui s'étend axialement vers l'extérieur depuis la première face latérale 25 et/ou depuis la seconde face latérale 26. On comprend que cet unique pied de calage 21 est circulaire.

L'anneau interne 2 peut comporter une pluralité de pieds de calage 21 destinés à prendre appui contre la jante monobloc 8. Les pieds de calage 21 peuvent s'étendre axialement vers l'extérieur depuis la première face latérale 25 et/ou depuis la seconde face latérale 26. La pluralité de pieds de calage 21 peuvent être répartis circonférentiellement sur la première face latérale 25 et/ou la seconde face latérale 26. On comprend que les pieds de calage 21 peuvent être répartis sur une seule des faces latérales 25, 26. Par exemple , sur la figure 2, les pieds de calage 21 s'étendent tous depuis la seconde face latérale 26. Une pluralité de pieds de calage 21 présente l'avantage de permettre un allègement du dispositif 1 par rapport à un pied de calage unique circulaire.

Les pieds de calage 21 peuvent être répartis alternativement, c'est-à-dire qu'un pied de calage peut s'étendre depuis la première face latérale 25 et un autre peut s'étendre depuis la seconde face latérale 26.

Le dispositif 1 comporte au moins deux secteurs 3a, 3b. Un exemple de secteur 3a, 3b est représenté sur la figure 3. Chaque secteur 3a, 3b est muni d'une périphérie radialement interne 32 et d'une périphérie radialement externe 33.

Chaque secteur 3a, 3b comporte, en outre, une rainure 31 agencée sur la périphérie radialement interne 32. Cette rainure 31 est configurée pour coopérer avec le bossage annulaire 22 de l'anneau interne 2.

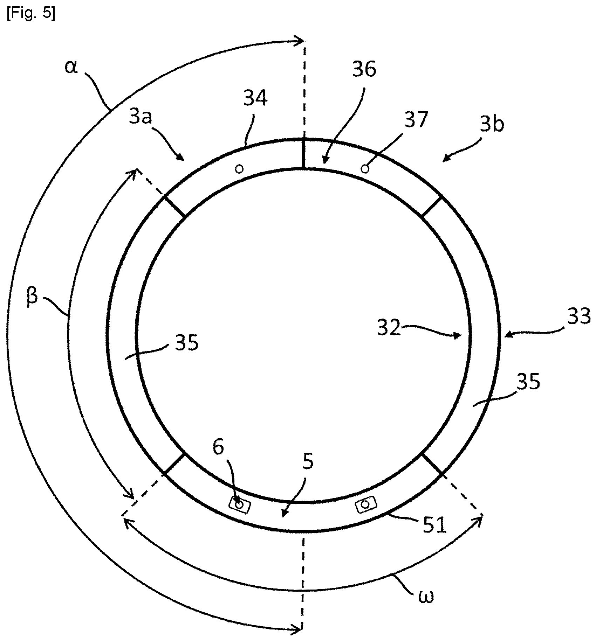

Chaque secteur 3a, 3b comporte également un premier bord latéral 34 qui s'évase radialement vers l'extérieur à partir de la périphérie radialement externe 33. Ce premier bord latéral 34 présente une étendue angulaire circonférentielle α définissant celle du secteur 3a, 3b. Autrement dit, l'étendue angulaire d'un secteur 3a, 3b est identique à l'étendue angulaire du premier bord latéral 34. Chaque secteur 3a, 3b comporte aussi un second bord latéral 35 qui s'évase radialement vers l'extérieur à partir de la périphérie radialement externe 33. Ce second bord latéral 35 présente une étendue angulaire circonférentielle β qui est inférieure à l'étendue angulaire circonférentielle α du premier bord latéral 34, comme représenté sur la figure 5. De la sorte, une fois les secteurs 3a, 3b montés sur l'anneau interne, les seconds bords latéraux 35 des secteurs 3a, 3b définissent des ouvertures 36.

Chaque secteur 3a, 3b présente une première extrémité 30a et une seconde extrémité 30b. La première extrémité 30a d'un premier secteur 3a est configurée pour coopérer avec la seconde extrémité 30b d'un deuxième secteur 3b. On comprend que, dans le cas où le dispositif 1 comporte deux secteurs 3a, 3b, la seconde extrémité 30b du premier secteur 3a est configurée pour coopérer avec la première extrémité 30a du deuxième secteur 3b.

Avantageusement, chaque secteur 3a, 3b comporte à chacune de ses extrémités 30a, 30b des moyens de coopération 39a, 39b, un premier moyen de coopération 39a d'une première extrémité 30a d'un premier secteur 3a donné étant configuré pour coopérer avec un second moyen de coopération 39b d'une seconde extrémité 30b d'un deuxième secteur 3b. Ces moyens de coopération 39a, 39b peuvent prendre la forme d'un tenon 39a et d'une mortaise 39b, le tenon 39a d'un secteur 3a donné étant configuré pour coopérer avec la mortaise 39b d'un autre secteur 3b. On comprend qu'il y a un assemblage mécanique des secteurs 3a, 3b. En alternative, les moyens de coopération 39a, 39b peuvent prendre la forme d'aimants. On comprend qu'il y a un assemblage magnétique des secteurs 3a, 3b.

Ces moyens de coopération 39a, 39b aux extrémités 30a, 30b de chaque secteur 3a, 3b permettent de maintenir les secteurs 3a, 3b ensemble sur l'anneau interne 2 en attendant de recevoir une bande élastique 4 comme détaillé plus loin.

Avantageusement, les secteurs 3a, 3b sont rigides.

Avantageusement, les secteurs 3a, 3b sont identiques. Cela permet de faciliter leur interchangeabilité en remplaçant un secteur usagé par un autre sans avoir de problème de compatibilité avec les autres pièces. Cela permet également de faciliter leur production tout en réduisant les coûts.

Avantageusement, chacun des secteurs 3a, 3b comprend au moins un renfoncement 38 axial ménagé dans le premier bord latéral 34 et/ou dans le second bord latéral 35. Chaque renfoncement 38 peut être borgne ou traversant. Chaque renfoncement 38 axial peut avoir une forme globalement cylindrique. Ce renfoncement 38 axial permet un allégement en masse du secteur 3a, 3b sans nuire aux propriétés mécaniques, notamment de résistance à la compression, du secteur 3a, 3b.

Le premier bord latéral 34 peut présenter une première surface tronconique 34' qui s'étend radialement vers l'extérieur à partir de la périphérie radialement externe 33. Le second bord latéral 35 peut présenter une deuxième surface tronconique 35' qui s'étend radialement vers l'extérieur à partir de la périphérie radialement externe 33.

Le dispositif 1 de roulement à plat comporte également une bande élastique 4 faite d'une seule pièce. On entend par une seule pièce, une pièce qui est continue. De préférence, la bande élastique 4 n'est pas fendue sur sa largeur. On comprend que la bande élastique 4 prend une forme d'anneau fermé. La bande élastique 4 est configurée pour être montée contre la périphérie radialement externe 33 des secteurs 3a, 3b.

En particulier, la bande élastique 4 présente une bande de roulement 41 prévue pour être en contact avec le sol ou le pneumatique dégonflé/éclaté lors d'une défaillance de la roue sur laquelle le dispositif 1 de roulement à plat est installé.

La bande élastique 4 peut être en matériau élastomère.

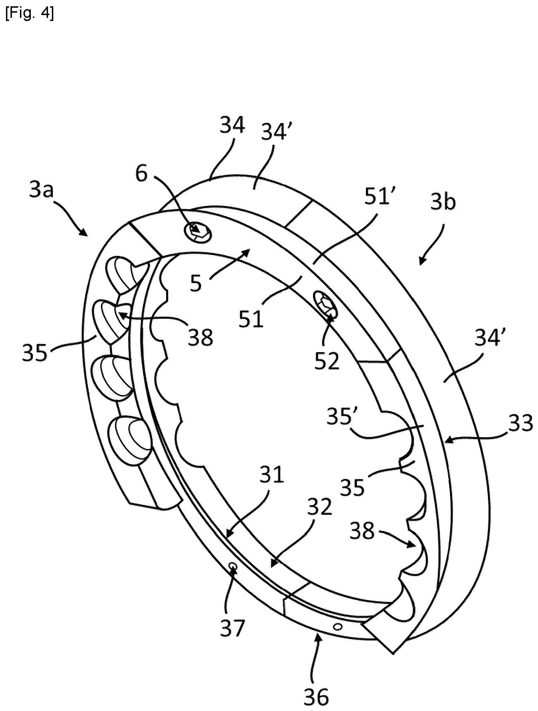

Le dispositif 1 de roulement à plat comporte au moins deux moyens de verrouillage 5. Chacun de ces moyens de verrouillage 5 est destiné à être inséré dans l'une des ouvertures 36 pour maintenir les secteurs 3a, 3b entre eux. Chaque moyen de verrouillage 5 comprend un rebord latéral 51 configuré pour venir dans le prolongement circonférentiel du second bord latéral 35 de chaque secteur 3a, 3b. Cet aspect est détaillé ci-après avec les figures 4 et 5. On comprend par ailleurs que le rebord latéral 51, lorsque le moyen de verrouillage 5 est inséré dans l'ouverture 36, s'évase radialement vers l'extérieur depuis la périphérie radialement externe 33 des secteurs 3a, 3b.

Chaque moyen de verrouillage 5 est fixé aux secteurs 3a, 3b, dans une des ouvertures 36, par au moins deux vis 6 retenues chacune par un écrou 7. Chaque vis 6 est inséré au travers un passage 52 du moyen de verrouillage 5 et un orifice 37 ménagé dans le premier bord latéral 34 d'un secteur 3a, 3b. Pour des vis 6 données, un moyen de verrouillage 5 est commun mais pas les secteurs 3a, 3b. Autrement dit, un premier ensemble vis/écrou 6, 7 relie le moyen de verrouillage 5 à un premier secteur 3a tandis qu'un second ensemble vis/écrou 6, 7 relie le moyen de verrouillage 5 à un deuxième secteur 3b.

Le rebord latéral 51 de chaque moyen de verrouillage 5 peut présenter une surface tronconique 51' qui s'étend radialement vers l'extérieur. Cette surface tronconique 51' est configurée pour s'étendre dans le prolongement de la seconde surface tronconique 35' des seconds bords latéraux 35 des secteurs 3a, 3b.

Les figures 4 et 5 représentent l'assemblage de deux secteurs 3a, 3b, tel qu'il pourrait être sur un anneau interne 2. Pour des raisons d'illustration, l'anneau interne 2 n'est pas représenté. L'assemblage est par ailleurs complété par un moyen de verrouillage 5 dans l'une des ouvertures 36.

Lorsque que les secteurs 3a, 3b sont assemblés, le premier bord latéral 34 du secteur 3a vient dans le prolongement circonférentiel du premier bord latéral 34 du secteur 3b. On comprend qu'il en est de même pour la première surface tronconique 34' de chaque premier bord latéral 34, le cas échéant.

Le second bord latéral 35 présentant une étendue angulaire circonférentielle β inférieure à l'étendue angulaire circonférentielle α du premier bord latéral 34, des ouvertures 36 sont définies entre chacun des seconds bords latéraux 35 des secteurs 3a, 3b. Les ouvertures 36 sont avantageusement définies pour être diamétralement opposées, l'une part rapport à une autre. On comprend que les seconds bords latéraux 35 et que les moyens de verrouillage 5 sont aussi respectivement diamétralement opposés. En utilisation, cela permet s'assurer un bon équilibrage du dispositif 1 de roulement et d'éviter un balourd.

Lorsqu'un des moyens de verrouillage 5 est inséré dans l'une des ouvertures 36 pour maintenir les secteurs 3a, 3b entre eux, le rebord latéral 51 du moyen de verrouillage 5 vient dans le prolongement circonférentiel de chacun des seconds bords latéraux 35 des secteurs 3a, 3b que le moyen de verrouillage maintient ensemble. On comprend qu'il en est de même pour la surface tronconique 51' du rebord latéral 51 avec les secondes surfaces tronconiques 35' des seconds bords latéraux 35, le cas échéant.

En référence à la figure 5, le premier bord latéral 34 présente une étendue angulaire circonférentielle α qui est au plus égale à 180° (degrés). Le second bord latéral 35 présente une étendue angulaire circonférentielle β qui est inférieure à l'étendue angulaire circonférentielle α du premier bord latéral 34. L'étendue angulaire circonférentielle β du second bord latéral 35 peut être comprise entre 30° et 150°. Dans l'exemple de la figure 5, l'étendue angulaire circonférentielle β du second bord latéral 35 est sensiblement égale à 120°.

Le rebord latéral 51 de chaque moyen de verrouillage 5 peut présenter une étendue angulaire circonférentielle ω sensiblement égale à l'étendue angulaire circonférentielle β du second bord latéral 35 d'un secteur 3a, 3b. On comprend que dans un tel cas, pour des raisons de limitations géométriques, l'étendue angulaire circonférentielle ω du rebord latéral 51 est sensiblement égale à l'étendue circonférentielle du second bord latéral 35 sans être supérieure à cette dernière. Dans un tel cas, l'étendue angulaire circonférentielle ω du rebord latéral 51 est au plus égale à 120°.

L'étendue angulaire circonférentielle ω du rebord latéral 51 peut, en outre, être inférieure ou supérieure à l'étendue angulaire circonférentielle β des seconds bords latéraux 35.

On s'intéresse à présent à la figure 6 qui représente plusieurs cas de figures A, B, C dans lesquels le rayon de la jante monobloc 8 varie. Par exemple, dans le cas A, le rayon de la jante 8 est R1, dans le cas B, le rayon de la jante 8 est R2 et dans le cas C, le rayon de la jante 8 est R3, de sorte que R3 < R1 < R2.

Le bossage annulaire 22 qui s'étend sur la face radialement externe 24 de l'anneau interne 2 présente une hauteur h prédéfinie qui s'étend radialement depuis la face radialement externe 24. Le bossage annulaire 22 étant conçu pour coopérer avec la rainure 31 des secteurs 3a, 3b, on comprend que la hauteur h prédéfinie du bossage annulaire 22 est sensiblement égale aux dimensions radiales de la rainure 31 des secteurs 3a, 3b. Cette hauteur h est prévue pour être fixe. On entend par fixe que la variation de la dimension est faible, voire négligeable..

La hauteur h du bossage annulaire 22 étant fixe, l'anneau interne 2 présente une épaisseur qui peut varier afin de compenser la variation du rayon, et donc du diamètre, des jantes 8. En pratique, d'un modèle à l'autre, le rayon d'une jante monobloc 8 peut changer. Il est alors d'intérêt d'avoir un anneau interne 2 adaptable sans avoir à apporter de modifications géométriques aux secteurs 3a, 3b et moyens de verrouillage 5. Plus précisément, c'est la dimension radiale w1, w2, w3 qui sépare la face radialement interne 23 de la face radialement externe 24 qui peut alors varier. On comprend que dans le cas A avec une jante monobloc 8 de rayon R1, l'anneau interne 2 présente une dimension radiale w1 ; dans le cas B avec une jante monobloc 8 de rayon R2, l'anneau interne 2 présente une dimension radiale w2 ; et dans le cas C avec une jante monobloc 8 de rayon R3, l'anneau interne 2 présente une dimension radiale w3, de sorte que w3 > w1 > w2 puisque R3 < R1 < R2. On comprend que la dimension radiale w1, w2, w3 varie inversement au rayon R1, R2, R3 de la jante.

On comprend que le rayon R1, R2, R3 de la jante 8 est équivalent au rayon de la face radialement interne 23 de l'anneau interne 2.

On comprend que l'anneau interne 2 peut être modifié pour s'adapter à des jantes monoblocs 8 différentes sans que les autres éléments du dispositif 1 de roulement à plat, comme les secteurs 3a, 3b, la bande élastique 4 ou les moyens de verrouillage 5, ne soient modifier. C'est en particulier la dimension radiale qui sépare la face radialement interne 23 de la face radialement externe 24 qui peut être modifiée.

Ceci présente l'avantage de faciliter l'installation du dispositif 1 de roulement à plat dans la mesure où seul l'anneau interne doit être adapté à la jante monobloc 8. Cela représente également un gain d'efficacité pour les opérateurs qui n'ont pas à chercher la bonne référence produit pour les secteurs 3a, 3b, moyens de verrouillage 5, bande élastique 4, ces derniers étant alors standards pour tout type de jante 8.

Dans l'invention, l'anneau interne 2 et/ou chaque secteur 3a, 3b et/ou chaque moyen de verrouillage 5 peuvent être en matériau plastique, composite ou métallique. On comprend que l'anneau interne 2, chaque secteur 3a, 3b et chaque moyen de verrouillage 5 peuvent être tous réalisés en un même matériau. On comprend également que parmi l'anneau interne 2, chaque secteur 3a, 3b et chaque moyen de verrouillage 5, au moins l'un des éléments précités peut être réalisé en un matériau différent des autres éléments.

Il est entendu que le dispositif 1 de roulement à plat peut se trouver sous la forme d'un kit dans lequel chaque élément ou une partie des éléments du dispositif 1 est séparé des autres éléments.

Le kit peut ainsi comporter un anneau interne 2, au moins deux secteurs 3a, 3b, une bande élastique 4 faite d'une seule pièce, au moins deux moyens de verrouillage 5 et au moins quatre éléments de fixation comme des vis 6 et des écrous 7, chacun des éléments précités étant tels que décrits dans ce qui précède.

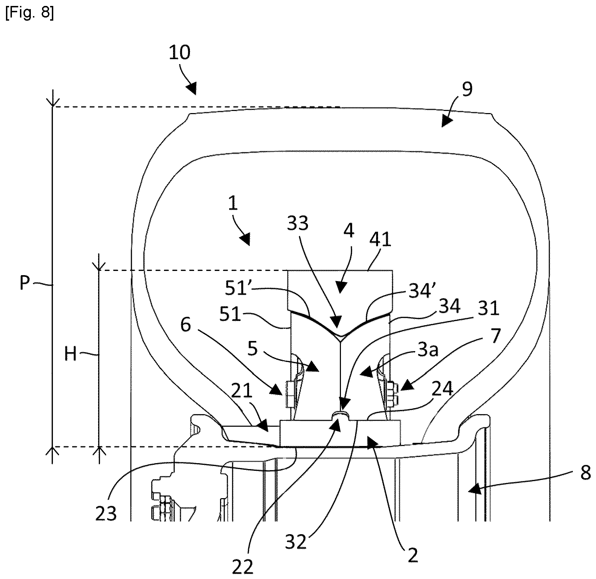

En référence aux figures 7 et 8, l'invention concerne également une roue 10 d'un véhicule, cette roue 10 comportant une jante monobloc 8 et un dispositif 1 de roulement à plat tel que décrit dans ce qui précède. Le dispositif 1 de roulement à plat est par ailleurs monté dans un pneumatique 9 autour de la jante monobloc 8.

Avantageusement, au sein de cette roue 10 le dispositif 1 de roulement à plat est conçu de telle sorte qu'un ratio entre la hauteur H du dispositif 1, définie radialement, et la hauteur P du pneumatique 9, définie radialement entre la jante monobloc 8 et la face externe du pneumatique dans un état de fonctionnement nominal, c'est-à-dire gonflé, est compris entre 0,4 et 0,6, et préférentiellement compris entre 0,45 et 0,55. Ceci est un optimum pour faciliter le montage du dispositif 1 sur la jante monobloc 8 sans le fragiliser à l'usage.

L'invention concerne également un procédé d'installation, autour d'une jante monobloc 8, d'un dispositif 1 de roulement à plat tel que décrit dans ce qui précède. Ce procédé comporte les étapes suivantes :
a) installer l'anneau interne 2 autour de la jante monobloc 8 de sorte que le ou les pieds de calage 21 sont en appui contre la jante 8 ;
b) monter chacun des secteurs 3a, 3b sur le anneau interne 2 en insérant le bossage annulaire 22 dans la rainure 31 des secteurs 3a, 3b de sorte qu'une fois les secteurs 3a, 3b montés sur l'anneau interne 2, les seconds bords latéraux 35 des secteurs 3a, 3b définissent des ouvertures 36 ;
c) installer la bande élastique 4 faite d'une seule pièce contre la périphérie radialement externe 33 des secteurs 3a, 3b ; et
d) insérer chacun des moyens de verrouillage 5 dans l'une des ouvertures 36 et fixer chaque moyen de verrouillage 5 de sorte à maintenir les secteurs 3a, 3b entre eux.

À l'étape a), l'anneau interne 2 qui est fendu peut être déformé radialement de sorte à avoir un diamètre supérieur à son diamètre initial. Grâce à cette déformation, l'anneau interne 2 peut plus facilement passer un des rebords de jante qui ont généralement des diamètres supérieurs au diamètre de la partir centrale de la jante 8. L'anneau interne 2 est en outre configuré pour reprendre, le cas échéant, sa forme initiale après avoir été déformé.

Toujours à l'étape a), le ou les pieds de calage 21 peuvent être placés contre un rebord de jante comme visible sur la figure 8.

À l'étape c), pour faciliter l'installation de la bande élastique 4 faite d'une seule pièce, celle-ci peut être passée par les ouvertures 36 pour être montée contre la périphérie radialement externe 33 des secteurs 3a, 3b. Les ouvertures 36 permettent de garantir une meilleure prise pour la bande élastique 4.

À l'étape d), une fois la bande élastique 4 montée contre la périphérie radialement externe 33, celle-ci est bloquée axialement entre les premier et second bords latéraux 34, 35 des secteurs 3a, 3b. Les moyens de verrouillage 5 insérés dans les ouvertures 36 viennent alors renforcer le blocage axial de la bande élastique 4. Les moyens de verrouillage 5 permettent d'empêcher, en utilisation, que la bande élastique 4 se désengage par les ouvertures 36 de la périphérie radialement externe 33.

À l'étape d), les moyens de verrouillage 5 peuvent être solidarisés aux secteurs 3a, 3b avec des éléments de fixation comme des vis 6 et écrous 7.

À la lumière de ce qui précède, on comprend que le dispositif 1 de roulement à plat présente l'avantage d'assurer une simplification de l'installation du dispositif de roulement à plat avec un minimum d'éléments à monter, tout en permettent à ces différents éléments de coopérer facilement entre eux. En effet, la fente de l'anneau interne permet à celui-ci de s'ouvrir radialement pour pouvoir être installé autour d'une jante monobloc, sans être gêné par les bords de la jante dont les diamètres respectifs sont généralement supérieurs au diamètre de la partie centrale de la jante autour duquel le dispositif est destiné à être installé. De plus, les secteurs sont guidés par le bossage annulaire de l'anneau interne pour être facilement montés et centrés sur l'anneau. Les différences de dimensions pour les étendues angulaires respectives des premier et second bords latéraux des secteurs permettent de définir des ouvertures qui peuvent servir de prises pour l'installation de la bande élastiques autour des secteurs, et donc faciliter son montage. En outre, les moyens de verrouillage, et en particulier leurs rebords latéraux, permettent de renforcer le blocage axial de la bande élastique entre les premier et second bords latéraux des secteurs, et permettent également, en utilisation, d'empêcher la bande élastique de se désengager de la périphérie radialement externe des secteurs.

## Revendications

1. Dispositif (1) de roulement à plat destiné à être monté autour d'une jante monobloc (8) de roue d'un véhicule, ledit dispositif comportant :
- un anneau interne (2) comportant une face radialement interne (23) destinée à être montée contre la jante monobloc, une face radialement externe (24), une première face latérale (25) et une seconde face latérale (26), reliant toutes deux la face radialement interne à la face radialement externe, ledit anneau interne (2) comportant :
• une fente (27) s'étendant sur la largeur de l'anneau interne entre la première face latérale (25) et la seconde face latérale (26),
• un bossage annulaire (22) agencé sur la face radialement externe (24), et
• au moins un pied de calage (21) destiné à prendre appui contre ladite jante (8);
**caractérisé en ce que** ledit dispositif comporte:
- au moins deux secteurs (3a, 3b), chaque secteur étant muni d'une périphérie radialement interne (32) et d'une périphérie radialement externe (33), et comprenant :
• une rainure (31) agencée sur la périphérie radialement interne (32) pour coopérer avec le bossage annulaire (22) de l'anneau interne (2),
• un premier bord latéral (34) s'évasant radialement vers l'extérieur à partir de la périphérie radialement externe (33) et présentant une étendue angulaire circonférentielle (α) définissant celle du secteur (3a, 3b), et
• un second bord latéral (35) s'évasant radialement vers l'extérieur à partir de la périphérie radialement externe (33) et présentant une étendue angulaire circonférentielle (β) inférieure à l'étendue angulaire circonférentielle (α) du premier bord latéral (34),
de sorte qu'une fois lesdits au moins deux secteurs (3a, 3b) montés sur l'anneau interne (2), les seconds bords latéraux (35) desdits au moins deux secteurs définissent des ouvertures (36) ;
- une bande élastique (4) faite d'une seule pièce, configurée pour être montée contre la périphérie radialement externe (33) desdits au moins deux secteurs (3a, 3b) ;
- au moins deux moyens de verrouillage (5), chacun étant destiné à être inséré dans l'une des ouvertures (36) pour maintenir lesdits au moins deux secteurs (3a, 3b) entre eux, chaque moyen de verrouillage (5) comprenant un rebord latéral (51) configuré pour venir dans le prolongement circonférentiel du second bord latéral (35) de chaque secteur (3a, 3b).

2. Dispositif (1) selon la revendication 1, dans lequel lesdites ouvertures (36) définies par les seconds bords latéraux (35) desdits au moins deux secteurs (3a, 3b) sont diamétralement opposées.

3. Dispositif (1) selon l'une quelconque des revendications 1 ou 2, dans lequel l'anneau interne (2) et/ou chaque secteur (3a, 3b) et/ou chaque moyen de verrouillage (5) sont en matériau plastique, composite ou métallique.

4. Dispositif (1) selon l'une quelconque des revendications 1 à 3, dans lequel chacun des secteurs (3a, 3b) comprend au moins un renfoncement (38) axial ménagé dans le premier bord latéral (34) et/ou dans le second bord latéral (35).

5. Dispositif (1) selon l'une quelconque des revendications 1 à 4, dans lequel chaque rebord latéral (51) desdits au moins deux moyens de verrouillage (5) présente une étendue angulaire circonférentielle (ω) sensiblement égale à l'étendue angulaire circonférentielle (β) du second bord latéral (35) d'un secteur (3a, 3b).

6. Dispositif (1) selon l'une quelconque des revendication 1 à 5, dans lequel chaque secteur (3a, 3b) comporte une première extrémité (30a) et une seconde extrémité (30b), lesdites extrémités comportant des moyens de coopération (39a, 39b).

7. Dispositif (1) selon la revendication 6, dans lequel lesdits moyens de coopération (39a, 39b) sont mécaniques ou magnétiques.

8. Roue (10) d'un véhicule, ladite roue comportant une jante monobloc (8) et un dispositif (1) de roulement à plat selon l'une quelconque des revendications 1 à 7, ledit dispositif étant monté dans un pneumatique (9) autour de ladite jante monobloc (8).

9. Procédé d'installation d'un dispositif (1) de roulement à plat selon l'une quelconque des revendications 1 à 7 autour d'une jante monobloc (8), ledit procédé comportant les étapes suivantes :
a) installer l'anneau interne (2) autour de ladite jante monobloc (8) de sorte que ledit au moins un pied de calage (21) est en appui contre ladite jante ;
b)monter chacun des secteurs (3a, 3b) sur ledit anneau interne en insérant le bossage annulaire (22) dans la rainure (31) desdits secteurs de sorte qu'une fois lesdits secteurs montés sur l'anneau interne, les seconds bords latéraux desdits secteurs définissent des ouvertures (36) ;
c) installer la bande élastique (4) faite d'une seule pièce contre la périphérie radialement externe (33) desdits secteurs (3a, 3b) ; et
d)insérer chacun des moyens de verrouillage (5) dans l'une des ouvertures (36) et fixer chaque moyen de verrouillage de sorte à maintenir lesdits secteurs (3a, 3b) entre eux.

## Patentansprüche

1. Flachwälzlagervorrichtung (1), die dazu vorgesehen ist, um eine einteilige Radfelge (8) eines Fahrzeugs herum angebracht zu werden, wobei die Vorrichtung umfasst:
- einen inneren Ring (2), umfassend eine radial innere Fläche (23), die dazu vorgesehen ist, an der einteiligen Felge angebracht zu werden, eine radial äußere Fläche (24), eine erste Seitenfläche (25) und eine zweite Seitenfläche (26), die alle beide die radial innere Fläche mit der radial äußeren Fläche verbinden, wobei der innere Ring (2) Folgendes umfasst:
- einen Schlitz (27), der sich über die Breite des inneren Rings zwischen der ersten Seitenfläche (25) und der zweiten Seitenfläche (26) erstreckt,
- einen ringförmigen Vorsprung (22), der auf der radial äußeren Fläche (24) angeordnet ist, und
- mindestens einen Keilfuß (21), der dazu vorgesehen ist, an der Felge (8) anzuliegen;
**dadurch gekennzeichnet, dass** die Vorrichtung umfasst:
- mindestens zwei Teilbereiche (3a, 3b), wobei jeder Teilbereich mit einem radial inneren Umfang (32) und einem radial äußeren Umfang (33) ausgestattet ist und Folgendes umfasst:
- eine Nut (31), die auf dem radial inneren Umfang (32) zum Zusammenwirken mit dem ringförmigen Vorsprung (22) des inneren Rings (2) angeordnet ist,
- eine erste Seitenkante (34), die sich ausgehend vom radial äußeren Umfang (33) radial nach außen erweitert und eine Umfangswinkelausdehnung (α) aufweist, die jene des Teilbereichs (3a, 3b) bildet, und
- eine zweite Seitenkante (35), die sich ausgehend vom radial äußeren Umfang (33) radial nach außen erweitert und eine Umfangswinkelausdehnung (β) aufweist, die kleiner ist als die Umfangswinkelausdehnung (α) der ersten Seitenkante (34),
sodass nach Anbringen der mindestens zwei Teilbereiche (3a, 3b) am inneren Ring (2) die zweiten Seitenkanten (35) der mindestens zwei Teilbereiche Öffnungen (36) bilden;
- ein aus einem einzigen Stück bestehendes Gummiband (4), das so ausgebildet ist, dass es am radial äußeren Umfang (33) der mindestens zwei Teilbereiche (3a, 3b) angebracht wird;
- mindestens zwei Verriegelungsmittel (5), die jeweils dazu vorgesehen sind, in eine der Öffnungen (36) eingesetzt zu werden, um die mindestens zwei Teilbereiche (3a, 3b) zusammenzuhalten, wobei jedes Verriegelungsmittel (5) einen Seitenrand (51) umfasst, der so ausgebildet ist, dass er in der Umfangserstreckung der zweiten Seitenkante (35) jedes Teilbereichs (3a, 3b) verläuft.

2. Vorrichtung (1) nach Anspruch 1, wobei die von den zweiten Seitenkanten (35) der mindestens zwei Teilbereiche (3a, 3b) gebildeten Öffnungen (36) diametral gegenüberliegend sind.

3. Vorrichtung (1) nach einem der Ansprüche 1 oder 2, wobei der innere Ring (2) und/oder jeder Teilbereich (3a, 3b) und/oder jedes Verriegelungsmittel (5) aus Kunststoff-, Verbund- oder Metallmaterial sind.

4. Vorrichtung (1) nach einem der Ansprüche 1 oder 3, wobei jeder der Teilbereiche (3a, 3b) mindestens eine axiale Verstärkung (38) umfasst, die in der ersten Seitenkante (34) und/oder in der zweiten Seitenkante (35) eingerichtet ist

5. Vorrichtung (1) nach einem der Ansprüche 1 oder 4, wobei jeder Seitenrand (51) der mindestens zwei Verriegelungsmittel (5) einen Umfangswinkelausdehnung (ω) aufweist, der im Wesentlichen gleich dem Umfangswinkelausdehnung (β) der zweiten Seitenkante (35) eines Teilbereichs (3a, 3b) ist.

6. Vorrichtung (1) nach einem der Ansprüche 1 oder 5, wobei jeder Teilbereich (3a, 3b) ein erstes Ende (30a) und ein zweites Ende (30b) umfasst, wobei die Enden Mittel zum Zusammenwirken (39a, 39b) umfassen.

7. Vorrichtung (1) nach Anspruch 6, wobei die Mittel zum Zusammenwirken (39a, 39b) mechanisch oder magnetisch sind.

8. Rad (10) eines Fahrzeugs, wobei das Rad eine einteilige Felge (8) und eine Flachwälzvorrichtung (1) nach einem der Ansprüche 1 bis 7 umfasst, wobei die Vorrichtung in einem Reifen (9) um die einteilige Felge (8) herum angebracht ist.

9. Verfahren zum Einbau einer Flachwälzvorrichtung (1) nach einem der Ansprüche 1 bis 7 um eine einteilige Felge (8) herum, wobei das Verfahren die folgenden Schritte umfasst:
a) Einbauen des inneren Rings (2) um die einteilige Felge (8) herum, sodass der mindestens eine Keilfuß (21) an der Felge anliegt;
b) Anbringen jedes der Teilbereiche (3a, 3b) am inneren Ring, indem der ringförmige Vorsprung (22) in die Nut (31) der Teilbereiche derart eingesetzt wird, dass die zweiten Seitenkanten der Teilbereiche, nach Anbringen der Teilbereiche am inneren Ring, Öffnungen (36) bilden;
c) Einbauen des aus einem einzigen Stück bestehenden Gummibandes (4) am radial äußeren Umfang (33) der Teilbereiche (3a, 3b); und
d) Einsetzen jedes der Verriegelungsmittel (5) in eine der Öffnungen (36) und Befestigen jedes Verriegelungsmittel derart, dass die Teilbereiche (3a, 3b) zusammengehalten werden.

## Claims

1. A run-flat device (1) configured to be mounted around a one-part wheel rim (8) of a vehicle, said device comprising:
- an inner ring (2) comprising a radially inner face (23) configured to be mounted against the one-part rim, a radially outer face (24), a first lateral face (25) and a second lateral face (26), both connecting the radially inner face to the radially outer face, said inner ring (2) comprising:
∘ a slot (27) extending across the width of the inner ring between the first lateral face (25) and the second lateral face (26),
∘ an annular boss (22) arranged on the radially outer face (24), and
∘ at least one wedging foot (21) configured to rest against said rim (8);
**characterized in that** said device comprises:
- at least two sectors (3a, 3b), each sector being equipped with a radially inner periphery (32) and a radially outer periphery (33), and comprising:
∘ a groove (31) arranged on the radially inner periphery (32) to cooperate with the annular boss (22) of the inner ring (2),
∘ a first lateral edge (34) flaring radially outwards from the radially outer periphery (33) and having a circumferential angular extent (α) defining that of the sector (3a, 3b), and
∘ a second lateral edge (35) flaring radially outwards from the radially outer periphery (33) and having a circumferential angular extent (β) less than the circumferential angular extent (α) of the first lateral edge (34),
so that once said at least two sectors (3a, 3b) are mounted on the inner ring (2), the second lateral edges (35) of said at least two sectors define openings (36);
∘ a one-part elastic band (4) configured to be mounted against the radially outer periphery (33) of said at least two sectors (3a, 3b);
∘ at least two locking means (5), each configured to be inserted into one of the openings (36) to hold said at least two sectors (3a, 3b) between them, each locking means (5) comprising a lateral flange (51) configured to come into the circumferential extension of the second lateral edge (35) of each sector (3a, 3b).

2. The device (1) according to claim 1, wherein said openings (36) defined by the second lateral edges (35) of said at least two sectors (3a, 3b) are diametrically opposed.

3. The device (1) according to any one of claims 1 or 2, wherein the inner ring (2) and/or each sector (3a, 3b) and/or each locking means (5) are made of plastic, composite or metallic material.

4. The device (1) according to any one of claims 1 to 3, wherein each of the sectors (3a, 3b) comprises at least one axial recess (38) formed in the first lateral edge (34) and/or in the second lateral edge (35).

5. The device (1) according to any one of claims 1 to 4, wherein each lateral flange (51) of said at least two locking means (5) has a circumferential angular extent (ω) substantially equal to the circumferential angular extent (β) of the second lateral edge (35) of a sector (3a, 3b).

6. The device (1) according to any one of claims 1 to 5, wherein each sector (3a, 3b) comprises a first end (30a) and a second end (30b), said ends comprising cooperation means (39a, 39b).

7. The device (1) as claimed in claim 6, wherein said cooperation means (39a, 39b) are mechanical or magnetic.

8. A wheel (10) for a vehicle, said wheel comprising a one-part rim (8) and a run-flat device (1) according to any one of claims 1 to 7, said device being mounted in a tire (9) around said one-part rim (8).

9. A method for installing a run-flat device (1) according to any one of claims 1 to 7 around a one-part rim (8), said method comprising the following steps:
a) installing the inner ring (2) around said one-part rim (8) so that said at least one wedging foot (21) rests against said rim;
b) mounting each of the sectors (3a, 3b) on said inner ring by inserting the annular boss (22) into the groove (31) of said sectors so that, once said sectors are mounted on the inner ring, the second lateral edges of said sectors define openings (36);
c) installing the one-part elastic band (4) against the radially outer periphery (33) of said sectors (3a, 3b); and
d) inserting each of the locking means (5) into one of the openings (36) and securing each locking means so as to hold said sectors (3a, 3b) together.
